# EUROPEAN PATENT APPLICATION

(11) **EP 1 980 726 A1**
(43) Date of publication of application: **15.10.2008**
(21) Application number: 08153183.2
(22) Date of filing: 21.03.2008
(51) Int. Cl.: F01N 3/021, F01N 3/28

(54) **Catalytic converter with inner sheath and method for making the same**

(30) Priority: 02.04.2007 US 732089
(71) Applicant: Delphi Technologies, Inc., Troy, Michigan 48007 (US)
(72) Inventor: Hardesty, Jeffrey B., Big Rapids, MI 49307 (US)
(74) Representative: Denton, Michael John

(57) **Abstract**

A catalytic converter (10) has a cylindrical, monolithic catalyst element (30) cylindrically enclosed and retained in a thin metallic sheath (40) having ends (44,46) extending to end portions of a case (12) around openings (20,24) therein so that the sheath (40) substantially divides the internal volume of the case (12) into an inner flow channel containing the catalyst element (30) through which substantially all gas flow is directed and an outer volume separated from the catalytic element (30) and retaining a heat insulating mat (50) wrapped around the sheath (40). The sheath may be provided with a resilient structure (44,46) at each end to engage the case and thus help support the catalyst element (30) therein.

## Description

### Technical Field

The technical field of this invention is catalytic converters for engine exhaust gases.

### Background of the Invention

One type of catalytic converter for engine exhaust gases provides a catalyst element comprising a monolithic, catalyst coated, ceramic substrate. The catalyst element is contained in a metal case having openings at opposing ends to allow exhaust gas flow through the substrate. Because the substrate is extremely hot during use, insulation is used between the substrate and the case to reduce heat transfer to the case. The insulation typically takes the form of an insulating mat wrapped around the substrate. In addition, inner metallic end cones or end rings are used to direct the flow of hot exhaust gases away from the insulation and through the substrate, so as to reduce heating of the case and prevent erosion of the insulating mat by this hot exhaust gas flow.

This construction has several problems. Hot exhaust gases can escape the substrate and flow through the volume containing the insulating mat. These gases can loosen components or pieces of the mat insulation material, which can get around the inner end cone or end ring and plug the face of high cell density catalysts. In addition, end cones require complex, expensive dies. Furthermore, the insulating mat must hold the substrate firmly in place within the case; and this can require high forces capable of destroying fragile ceramic substrates.

### Summary of the Invention

The catalytic converter of this invention cylindrically encloses a ceramic catalyst element in a metallic sheath that grips the catalyst element and has opposing open ends with at least one of these ends projecting axially beyond the axial end of the catalyst element. An insulating mat cylindrically surrounds the sheath; and a case cylindrically surrounds the insulating mat. The case has opposing axial end portions defining openings for gas flow; and the end of the metallic sheath that projects axially past the end of the catalyst element extends substantially to the inlet end of the case such that the sheath directs substantially all gas flow through the catalyst element and shields the insulating mat from the gas flow.

In a preferred embodiment of the invention, the opposing open axial ends of the metallic sheath are beaded or otherwise structured to be axially resilient relative to a remainder of the metallic sheath, and these ends engage an end portion of the outer case structure to more completely prevent hot, high energy gases from impinging on the insulating mat and to provide additional axial support for the catalyst element, so that the constrictive forces exerted by the mat on the catalyst element may be lowered.

The catalytic converter may be manufactured by the following method. A catalyst element is provided having a cylindrical shape with opposing axial ends. A rectangular metallic sheet, which may be provided with a resilient structure at one or both of opposing rectangular ends, is rolled into a cylindrical metallic sheath with one or both of the first and second axial ends extending beyond the axial length of the catalyst element. The sheath is wrapped and tightened around the catalyst element to grip and retain the catalyst element therein; and parts of the sheath are preferably permanently joined to provide a sheathed catalyst structure.
A heat insulating mat is wrapped around the cylindrical metallic sheath; and the sheathed catalyst structure, wrapped by the heat insulating mat, is inserted in a cylindrical case such that the first beaded axial end of the sheath, if so designed, resiliently engages a first axial end portion of the cylindrical case. Finally, a second, opposing axial end portion is formed on the case such that the second beaded axial end of the sheath, if so designed, resiliently engages the second axial end portion of the cylindrical case, with the sheath defining a flow chamber containing the catalyst element between a pair of openings in the case for substantially all gas flow through the catalytic converter and optionally supporting the catalyst element in the case.

### Brief Description of the Drawings

The present invention will now be described, by way of example, with reference to the accompanying drawings, in which:

FIG.1 is an axial sectional view of a catalytic converter according to this invention.

FIG.2 is a perspective view of an inner metallic sheath for use in the catalytic converter of FIG. 1.

FIG.3 is a partial axial section of an alternate embodiment of a catalytic converter according to this invention.

FIG.4 is a partial axial section of another alternate embodiment of a catalytic converter according to this invention.

FIG. 5 is a flow chart describing a method of manufacturing a catalytic converter according to this invention.

### Description of the Preferred Embodiment

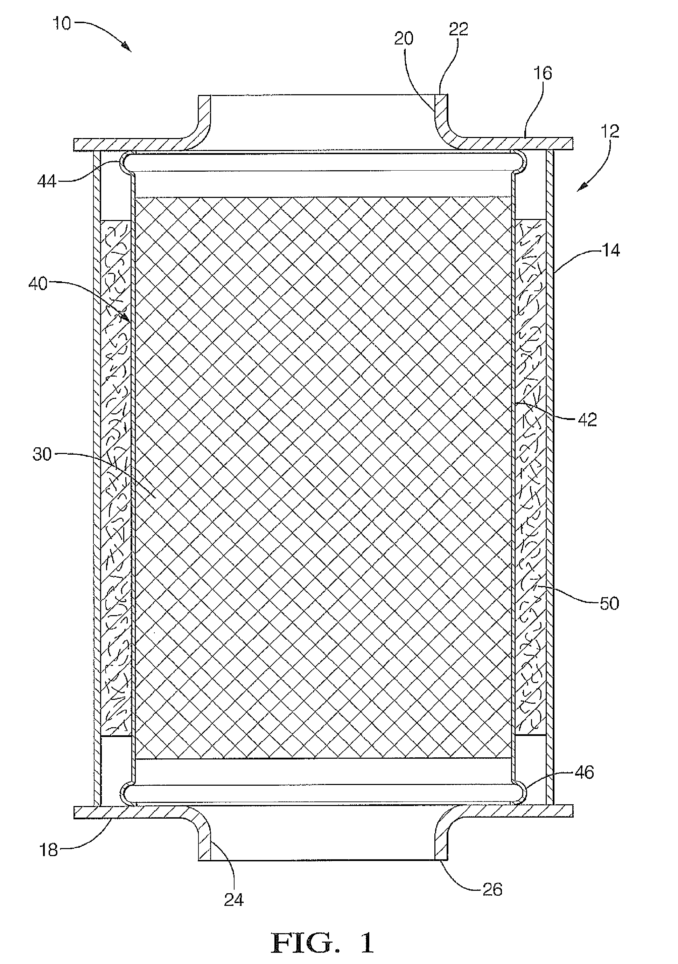

Referring to Figure 1, a first embodiment of a catalytic converter 10 has an outer case 12 made up of a cylindrical case member 14 and a pair of end members 16, 18, one of which closes each axial end of case member 14. In this description, the word "cylindrical" is used in its broad sense, in which its intersection with a plane normal to its axis may be any closed curve that can be usefully manufactured; but the preferred embodiment shown herein is circularly cylindrical. Each of end plates 16, 18 is fixed to case member 14 by welding or by another assembly method that provides a sealed enclosure for outer case 12. End plate 16 is provided with a generally central opening 20 with a generally circular edge 22 that is turned out to form a fitting for a connecting exhaust pipe, whereby exhaust gasses are introduced or removed from case 12; and end plate 18 is provided with a similar opening 24 with a similar edge 26.

Outer case 12 contains a generally cylindrical, monolithic catalyst element 30 with a cross-section that is preferably, but not necessarily, circular. Catalyst element 30 may be any such element, preferably comprising a ceramic substrate with a flow-through structure and coated with a catalytic substance to promote chemical activity in gasses flowing therethrough. Typically, although not exclusively, such substrates have a multi-path structure to maximize the catalyst coated area to which the gasses are exposed. Catalyst element 30 may have essentially flat axial ends and preferably extends most of the axial distance from end plate 16 to end plate 18. Such catalyst elements are well known in the art and will not be further described in detail except where necessary to further describe this invention.

Catalyst element 30 is retained in an inner sheath 40, which is made of a thin sheet metal alloy capable of withstanding the high temperatures and corrosive atmosphere inside catalytic converter 10. Examples of such an alloy are 439, fecrolloy, inconel or 321SS; and other examples may come to the mind of one skilled in the art. The axially central portion 42 of sheath 40 has a generally cylindrical shape matching that of the outer perimeter of catalyst element 30 and is wrapped tightly around catalyst element 30 to retain it. The inner surface of sheath 40 may be knurled or otherwise roughened to improve this retention, and the outer surface of sheath 40 may also be roughened, for reasons that will be apparent below.

At each axial end 44, 46 of inner sheath 40, it is provided with an axially resilient structure to provide a resilient engagement with the adjacent end plate 16, 18 respectively. The axially resilient structure may preferably, but not exclusively, take the form of a bead forming a roll in the metal that is convex as seen radially toward the axis and concave when viewed in the opposite direction, as shown in FIG. 1. The beaded roll may be a single arc or it may include multiple arcs. Alternatively, the resilient structure may comprise one or more angular folds or a combination of arc(s) and angular fold(s). With beaded ends 44, 46 of sheath 40 providing axial retention of the sheath in outer case 20 and sheath 40 axially gripping catalyst element 30 therein, catalyst element 30 is firmly retained in outer case 20 in the axial direction. The engagement of beaded ends 44, 46 with end plates 16, 18 is radially outward of the openings 20, 24, so as to direct substantially all exhaust gasses entering catalytic converter 10 through catalyst element 30.

An insulating mat 50 is wrapped about sheath 40 and has a radial thickness extending between sheath 40 and cylindrical case member 22 of outer case 20. Mat 50 is made generally of a heat insulating material normally used to provide heat insulation between a hot catalyst element 30 and outer case 20 but may have a lower mount density and be less tightly wrapped, since sheath 40 axially retains catalyst element 30. Mat 50 may or may not contain vermiculite particles, depending on the quality of the seal between sheath 40 and end plates 16, 18. Mat 50 is located in an annular space outside sheath 40 that is generally isolated from the hot exhaust gas flow through catalytic converter 10. Thus mat 50 is protected from damage by hot exhaust flow, and catalyst element 30 is protected from blockage by pieces of mat 50 that might otherwise be separated and blown into the direct exhaust path through the catalyst element. Mat 50 also, through the tension of its wrapping, assists sheath 40 in gripping catalyst element 30 and further provides resistance to movement of the sheath 40 and catalyst element 30 perpendicular to the axis. A roughened outer surface of sheath 40 may assist in this resistance to movement by providing a better grip between metallic sheath 40 and insulating mat 50.

The beading of the ends 44, 46 of metallic sheath 40 may not be required in all embodiments of the invention if (1) the constrictive force of insulating mat 50 applied to catalyst element 30 through metallic sheath 40 is sufficient to provide axial support for the catalyst element within case 50, and if (2) the ends of metallic sheath 40 are not required to actually engage case 50, especially at the inlet end, in order to adequately prevent entry of hot, high energy gases into the insulating mat. In some embodiments, such engagement will not be necessary if the end of metallic sheath 40 comes close to case 50 without engaging it, since very little gas flow will find its way through the gap, and such gases that do enter the insulating mat through that gap will have reduced kinetic energy due to the gap constriction and will thus not unduly erode or otherwise damage the insulating mat. Thus, this invention in its broadest sense requires that the inlet side end of the metallic sheath extends substantially to the case structure, where the word "substantially" means engaging or at least close enough to satisfy the design requirements of this paragraph.

In addition, if additional axial support of the catalyst element is not required from sheath engagement with the case in a particular embodiment, it may not be necessary to extent the sheath beyond the end of the catalyst element at the outlet end of the catalytic converter, since there is little problem with gases entering the insulating mat at this end. But, since the gases at the outlet end of the converter tend to be quite hot, it will be preferable in many embodiments to provide such extension of the sheath at the outlet end to improved thermal isolation of the case from the hot gases at the outlet end of the catalytic converter.

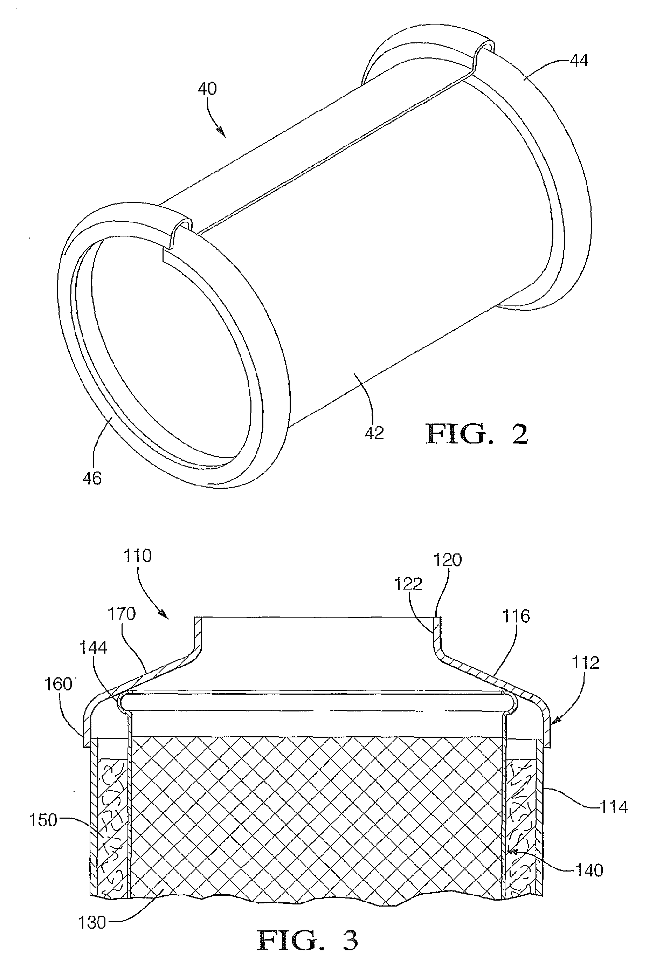

FIG. 2 shows an alternative end structure in a catalytic converter 110 having a sheath 140 enclosing a catalyst element 130 and wrapped with an insulating mat 150 essentially the same as those of catalytic converter 10 shown in FIG. 1. An outer case 112 comprises a cylindrical case member 114 closed at the end shown by an end member 116 having a large diameter axial end 160 engaging and closing case member 114, a tapering middle portion 170 engaged by beaded axial end 144 of sheath 140 and an smaller diameter, opposing axial end 122 defining an opening 120 for gas flow admittance to or exit from catalytic converter 110. Due to the tapering middle portion 170, sheath 140 provides lateral as well as axial support for catalyst element 130 within outer case 112. End member 116 may be formed from sheet metal by know processes and welded to the axial end of case member 114.

FIG. 3 shows another alternative end structure that is mostly identical to that of FIG. 2. Catalytic converter 210 of FIG. 3 provides a case member 214 with a tapering portion 120 engaged by beaded axial end 244 of sheath 240 and a small diameter axial end 222 defining an opening 220 for gas flow admittance to or exit from catalytic converter 210. Tapering portion 270 and end 222 with opening 220 be formed by known metal forming processes. It is also clear that an embodiment may provide one axial end as shown in FIG. 3 and an opposing axial end as shown in FIG. 2, so that a catalyst element, sheath and mat may be inserted into an outer case through an end opposing an end formed as shown in FIG. 3 and fully closed therein by the placement of an end member as shown in FIG. 2.

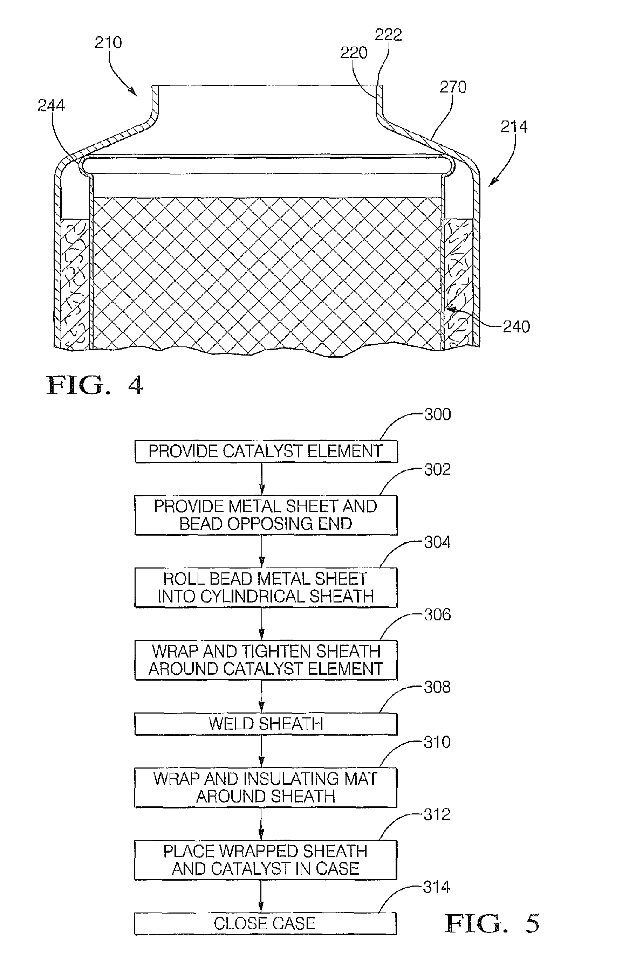

The method of manufacturing a catalytic converter as disclosed above will be described with reference to the flow chart of FIG. 5, supplemented by FIG. 1-4. The method begins in step 300 by providing a catalyst element such as cylindrical catalyst element 30. With the dimensions and physical characteristics of the catalyst element known, the method continues at step 302 by providing a beaded, rectangular sheet of a thin metal material as specified above in the description of the apparatus. Each rectangular metal sheet might, for example, be cut to the required length and width from rolled stock; and, if desired, one or both sides of the sheet may be roughened to better grip the catalyst element and/or mat, for example by knurling one side of the sheet stock as it is unrolled prior to cutting into individual rectangular sheets of the desired length and width. The step further comprises beading a sheet or otherwise creating a resilient structure for it on opposing ends as described above.

The method continues at step 304 with rolling of a sheet into a cylindrical sheath closely matching the cylindrical shape of the catalyst element, with a roughened surface of the sheet preferably forming the inner surface of the sheath. Such a cylindrical sheath is shown in FIG. 2, with the beaded ends 44, 46 of the sheet forming beaded axial ends of the sheath 40 at opposing ends of middle portion 42. At this point, the sheath is not yet fixed to a permanent diameter. In the next step 306 of the method, sheath 40 is wrapped around the catalyst element. The axial length of sheath 40 is preferably sufficient that beaded ends 44, 46 project just beyond the axial ends of the catalyst element. This provides the advantages of maximizing the area of contact of the roughened inner surface of sheath 40 with catalyst element 30 while keeping beaded ends 44, 46 free for eventual resilient engagement with the outer case. In step 308, sheath 40 is then tightened to firmly grip catalyst element 30; and the ends meeting or overlapping as a result of the wrap are preferably joined together by welding, staking, crimping, high temperature adhesive or any other useful and advantageous process or material as required to permanently combine sheath 40 and catalyst element 30 as a sheathed catalyst element. The welding or other joining may preferably be performed on beaded ends 44 and 46, although supplemental welding or other joining may be performed as necessary at spots on middle portion 42 of sheath 40.

In step 310, an insulating mat is wrapped around the sheath. This insulating mat is made of a heat insulating material or materials to insulate the outer case from the sheathed catalyst element, which becomes very hot in use. It further provides assistance to the sheath in radially fixing the catalyst element in the case. It may, however, be made less dense and need not be wrapped as tightly as it would be in a conventional converter of the prior art if the sheath includes resilient structure at its axial ends and is designed to engage the case and thus bear most of the retention loads in the axial direction. Alternatively, the insulating mat, if wrapped sufficiently tightly, may be sufficient to firmly hold the sheath on the catalyst element and may thus dispense with the need for permanent joining of parts of the metallic sheath by welding or other means.

The catalytic converter is finished in two final steps. In step 312, the sheathed catalyst element, wrapped in the insulating mat, is inserted axially into a case with a closing member or portion at one end to a specified position or, depending on the converter design, until one of the beaded axial ends of the sheath engages the closed axial end member or portion of the case. In step 314, the case is closed at the end through which the sheathed catalyst element was inserted. This is accomplished by attaching another end member or forming another end portion on the case in engagement with the other one of the beaded axial ends of the sheath. This step may be controlled to provide a resilient axial load on the sheath within a predetermined range to ensure positive axial and radial retention of the catalyst element within the case. It may be noted that, in the method described herein, the overlapping ends of the sheath, when joined by welding, may produce a slight discontinuity in the beaded ends that engage the end portions of the case, especially in embodiments such as those of FIG. 2 or 3. In such cases, a very small gap may occur through which a small amount of exhaust gas can enter a chamber defined between the sheath and the case where the insulating mat resides. But this gap will be extremely small, and any gas that manages to flow through this area likewise be so small and so slow flowing that it will be negligible in amount and force. And if this does prove to be a problem in a particular design, it may be remedied by the use of the end plate of FIG. 1, which presents an engagement surface perpendicular to the axis of the sheath so that the gap does not occur, or by further finishing of the welded portion of the beaded ends of the sheath to reduce or eliminate any such gap.

## Claims

1. A catalytic converter comprising, in combination:
a ceramic catalyst element (30) having a cylindrical shape with opposing axial ends;
a metallic sheath (40) cylindrically surrounding and gripping the catalyst element, the sheath having opposing, open axial ends (44, 46);
an insulating mat (50) cylindrically surrounding and gripping the sheath;
a case (12) having an axially central portion (14) cylindrically surrounding the insulating mat, the case further having opposing axial end portions (16, 18) defining openings (20, 24) for gas flow, at least one of the axial ends of the sheath projecting beyond the corresponding axial end of the catalyst element substantially to the corresponding axial end portion of the case to direct substantially all incoming gas flow through the catalyst element while mechanically shielding the insulating mat and thermally shielding a majority of the end portion from hot, high energy gas flow.

2. A catalytic converter according to claim 1, wherein a radially inner surface of the sheath is roughened to improve the grip of the sheath on the catalyst element.

3. A catalytic converter according to claim 1, wherein a radially outer surface of the sheath is roughened to improve the grip of the insulating mat on the sheath.

4. A catalytic converter according to claim 1, wherein both axial ends of the sheath project beyond the corresponding axial end of the catalyst element substantially to the corresponding axial end portion of the case to direct substantially all incoming gas flow through the catalyst element while mechanically shielding the insulating mat and thermally shielding a majority of both end portions from hot, high energy gases.

5. A catalytic converter according to claim 1 wherein each axial end of the metallic sheath extends beyond the corresponding axial end of the catalyst element and has an axially resilient end structure engaging the corresponding end portion of the case, whereby the metallic sheath provides a portion of axial support for the catalytic element within the case.

6. A catalytic converter according to claim 5 wherein at least one of the opposing axial end portions of the case comprises an end plate (16, 18) affixed thereto, the end plate axially engaging the resilient end structure at one end of the metallic sheath, the engaged resilient end structure of the metallic sheath thus being resiliently compressed by the end plate.

7. A catalytic converter according to claim 5 wherein at least one of the opposing axial end portions of the case comprises an end cone (112) having a tapering portion (116) axially engaging the resilient end structure at one end portion of the metallic sheath, the engaged resilient end structure of the metallic sheath thus being resiliently compressed by the tapering portion.

8. A catalytic converter according to claim 5, wherein at least one of the axially resilient end structures of the metallic sheath comprises a beaded end portion (44, 144, 244).

9. A catalytic converter according to claim 8 wherein the beaded axial end (44, 144, 244) of the metallic sheath has a radially outwardly concave longitudinal cross-section.

10. A catalytic converter according to claim 9 wherein the radially outwardly concave longitudinal cross-section comprises an arc.

11. A catalytic converter according to claim 5 wherein an inner surface of a portion of the metallic sheath (40) is roughened to assist gripping the catalyst element.

12. A catalytic converter according to claim 11 wherein an inner surface of a portion of the metallic sheath (40) is knurled.

13. A catalytic converter according to claim 5 wherein an outer surface of a portion of the metallic sheath (40) is roughened to assist gripping the insulating mat.

14. A catalytic converter according to claim 5 wherein the metallic sheath (40) comprises a sheet metal material having a thickness of 0.5 millimeter or less.

15. A method of manufacturing a catalytic converter comprising the steps:
providing (300) a catalyst element having a cylindrical shape with opposing axial ends;
providing (302) a rectangular metallic sheet beaded on opposing rectangular ends thereof;
rolling (304) the rectangular metallic sheet into a cylindrical metallic sheath having first and second beaded axial ends extending beyond the axial length of the catalyst element;
wrapping and tightening (306) the cylindrical metallic sheath around the catalyst element to grip and retain the catalyst element therein;
wrapping (310) a heat insulating mat around the cylindrical metallic sheath between the beaded axial ends thereof;
placing (312) the sheathed catalyst structure, wrapped by the heat insulating mat, in a cylindrical case such that the first beaded axial end of the sheath resiliently engages a first axial end portion of the cylindrical case; and
forming (314) a second, opposing axial end portion on the case such that the second beaded axial end of the sheath resiliently engages the second axial end portion of the cylindrical case, the sheath supporting the catalyst element in the case and defining a flow chamber containing the catalyst element between a pair of openings in the case for substantially all gas flow through the catalytic converter.

16. The method of claim 15 wherein the step of wrapping and tightening (306) the cylindrical metallic sheath around the catalyst element comprises joining parts of the sheath to provide a permanently sheathed catalyst structure.

17. The method of claim 16 wherein the step of wrapping and tightening (306) comprises spot welding each beaded end of the metallic sheath.

18. The method of claim 15 wherein the step of providing a rectangular metallic sheet (302) comprises cutting the rectangular metallic sheet from a roll of metallic sheet material having a thickness of 0.5 millimeter or less.

19. The method of claim 15 wherein at least one of the steps of providing a rectangular metallic sheet (302) and rolling the rectangular metallic sheet (304) further comprises roughening one surface thereof to create a roughened surface and the step of wrapping and tightening the cylindrical metallic sheath (306) places the roughened surface against the catalyst element to better grip the latter.

20. The method of claim 19 wherein the roughening is accomplished by knurling the one surface.
